# DEMANDE DE BREVET EUROPEEN

(11) **EP 3 001 117 A1**
(43) Date de publication de la demande: **30.03.2016**
(21) Numéro de dépôt: 15181500.8
(22) Date de dépôt: 19.08.2015
(51) Int. Cl.: F24F 12/00, E03D 11/14, E03C 1/01, F24F 5/00

(54) **UNITE D'EQUIPEMENT POUR UN LOCAL, INSTALLATION DE VENTILATION ET DE TRAITEMENT D'AIR COMPRENANT UNE TELLE UNITE ET INSTALLATION DE VENTILATION ET DE TRAITEMENT D'AIR DANS UN BATIMENT**

(30) Priorité: 19.08.2014 FR 1457874
(71) Demandeur: France Air, 01700 Beynost (FR)
(72) Inventeur: CACHOT, Lionel, 69400 VILLEFRANCHE (FR)
(74) Mandataire: Myon, Gérard Jean-Pierre

(57) **Abrégé**

Cette unité d'équipement (10) pour un local comprenant à la fois une ou plusieurs pièces techniques (2) incluant au moins des toilettes (2) et une ou plusieurs pièces de vie (4, 6, 8), est destinée à être installée dans les toilettes (2). Cette unité comprend, entre autres, dans un seul volume intérieur (V), un support de WC (12) et un système (19) de soufflage d'un flux d'air insufflé (F2) dans les pièces de vie (4, 6, 8) du local, le système de soufflage (19) comprenant un ventilateur d'insufflation (16) intégré à l'unité (10). Cette unité comprend en outre, dans le volume intérieur (V), un système (15) d'aspiration d'un flux d'air neuf (F1) depuis l'extérieur d'un bâtiment dans lequel le local est situé, un système d'extraction d'air de la ou des pièces techniques (2) du local, et un système de récupération d'énergie, comprenant un échangeur (36) à double flux dont les entrées sont connectées au système d'aspiration d'air extérieur (15) et d'extraction, et dont une sortie est connectée au système de soufflage (19) de manière que le flux d'air (F1) aspiré à l'extérieur soit insufflé (F2) dans les pièces de vie (4, 6, 8) du local par le système de soufflage (19) après avoir subi un échange thermique avec le flux d'air extrait dans l'échangeur à double flux (36).

## Description

L'invention concerne une unité d'équipement pour un local, notamment d'habitation ou tertiaire, ainsi qu'une installation de ventilation et de traitement d'air comprenant une telle unité d'équipement. L'invention concerne également une installation de ventilation et de traitement d'air dans un bâtiment.

Dans le domaine des installations de traitement d'air pour des logements d'habitation, il est connu d'installer, dans les toilettes, une unité d'équipement telle que décrite dans FR-A-2 971 530, qui renferme, dans un même volume situé derrière la cuvette des toilettes, un ventilo-convecteur et un plénum de distribution pour distribuer des flux d'air insufflés dans les pièces du logement, une chaudière produisant de l'eau chaude sanitaire et alimentant une batterie à eau chaude permettant de réchauffer l'air circulant dans le ventilo-convecteur, et un système de chasse d'eau. L'air neuf alimentant le ventilo-convecteur est aspiré à l'intérieur du logement par des bouches situées dans les pièces du logement. L'air neuf du logement est introduit par un fonctionnement de type simple flux, impliquant des entrées d'air dans les huisseries et l'extraction de l'air vicié dans les pièces techniques.

L'installation de traitement d'air précitée est un système fonctionnant en recyclage et ne permettant pas de récupérer les calories de l'air extrait du logement. Ce fonctionnement oblige à mettre en oeuvre des débits d'air importants afin d'apporter les calories nécessaires pour atteindre la consigne de température dans le local.

Le besoin actuel de logements à basse consommation d'énergie ou à énergie renouvelable, ainsi que l'existence accrue de réseaux de chaleur urbains permet de diminuer les débits d'air pour le fonctionnement des installations de traitement d'air des logements, rendent les installations actuellement existantes inadaptées.

C'est à ces inconvénients qu'entend plus particulièrement remédier l'invention en proposant une nouvelle unité d'équipement pour un local, permettant de chauffer le local par l'intermédiaire de la quantité d'air neuf nécessaire à la ventilation du local.

A cet effet, l'invention concerne une unité d'équipement pour un local comprenant à la fois une ou plusieurs pièces techniques incluant au moins des toilettes et une ou plusieurs pièces de vie, cette unité étant destinée à être installée dans les toilettes, cette unité comprenant entre autres, dans un seul volume intérieur, un support de WC et un système de soufflage d'un flux d'air insufflé dans les pièces de vie du local, le système de soufflage comprenant un ventilateur d'insufflation intégré à l'unité. Cette unité est caractérisée en ce qu'elle comprend en outre, dans le volume intérieur :
- un système d'aspiration d'un flux d'air neuf depuis l'extérieur d'un bâtiment dans lequel le local est situé,
- un système d'extraction d'air de la ou des pièces techniques du local,
- un système de récupération d'énergie, comprenant un échangeur à double flux dont les entrées sont connectées au système d'aspiration d'air extérieur et d'extraction, et dont une sortie est connectée au système de soufflage de manière que le flux d'air aspiré à l'extérieur soit insufflé dans les pièces de vie du local par le système de soufflage après avoir subi un échange thermique avec le flux d'air extrait dans l'échangeur à double flux.

Grâce à l'invention, la ventilation et le traitement d'air pour le local sont effectués dans l'unité d'équipement, ce qui permet de n'utiliser qu'un seul bloc d'équipements dont l'installation dans le local est simple. En outre, l'utilisation d'un système à double flux permet d'économiser de l'énergie car la chaleur du flux d'air extrait est récupérée et utilisée pour le chauffage du flux d'air neuf.

Selon des aspects avantageux mais non obligatoires de l'invention, une telle unité d'équipement peut incorporer une ou plusieurs des caractéristiques suivantes, prises dans toute combinaison techniquement admissible :
- L'unité d'équipement comprend un système auxiliaire de chauffage adapté pour insuffler un flux d'air d'appoint dans les pièces de vie du local.
- Le système auxiliaire comprend une batterie de chauffage adaptée pour chauffer le flux d'air d'appoint.
- Une paroi supérieure de l'unité, destinée à être montée contre un faux plafond du local, dans lequel le flux d'air d'appoint circule, comprend une ouverture d'aspiration du flux d'air d'appoint dans l'unité.
- Le système de soufflage comprend des batteries de chauffage pour chaque sortie d'air vers l'une des pièces de vie du local.
- L'unité d'équipement comprend une batterie de chauffage installée en amont de l'entrée du flux d'air neuf dans l'échangeur à double flux.
- L'unité d'équipement comprend un système de distribution d'eau chaude vers les batteries de chauffage installées dans l'unité d'équipements et adaptées pour chauffer les flux d'air insufflés dans les pièces de vie du local.
- Le système de distribution d'eau chaude est également adapté pour distribuer de l'eau chaude sanitaire à des équipements sanitaires du local.
- L'unité d'équipement comprend une chaudière apte à produire de l'eau chaude sanitaire ou alimenter des batteries à eau chaude destinées à chauffer les flux d'air insufflés dans les pièces de vie du local.

L'invention concerne également une installation de ventilation et de traitement d'air pour un local, comprenant une unité d'équipement telle que mentionnée ci-dessus. Cette installation comprend en outre des conduites d'air installées dans un faux plafond du local et des bouches de soufflage de flux d'air provenant de l'unité d'équipement raccordées aux conduites d'air.

L'invention concerne également une installation de ventilation et de traitement d'air pour un bâtiment comprenant plusieurs locaux, cette installation comprenant un ou des moyens centralisés d'extraction d'air des locaux et des moyens d'insufflation d'air individualisés pour chacun des locaux, comprenant, pour chaque local, une unité d'équipement telle que décrite ci-dessus, raccordée aux moyens centralisés d'extraction d'air.

L'invention sera mieux comprise et d'autres avantages de celle-ci apparaitront plus clairement à la lumière de la description qui va suivre d'une unité d'équipement et d'une installation de ventilation et de traitement d'air conformes à son principe, faite en référence aux dessins annexés dans lesquels :
- la figure 1 est une coupe schématique d'une installation de ventilation et de traitement d'air conforme à l'invention ;
- la figure 2 est une coupe schématique de l'installation de la figure 1 ;

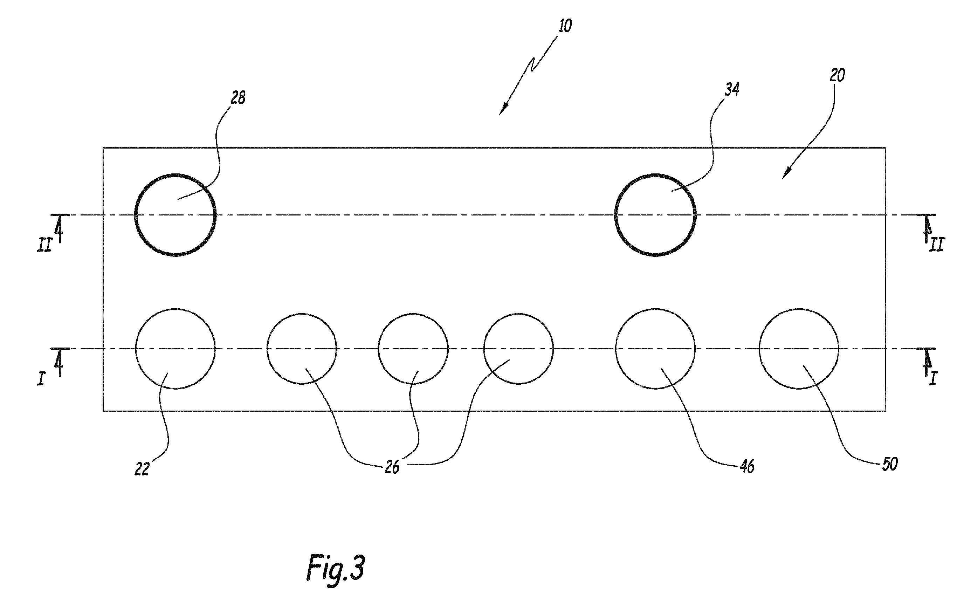

- la figure 3 est une vue schématique de dessus d'une unité d'équipement conforme à l'invention, appartenant à l'installation des figures 1 et 2 ; les plans de coupe 1 et 2 y sont repérés, respectivement avec les lignes I-I et II-II ;
- la figure 4 est une vue en perspective de l'unité d'équipement de la figure 3,
- la figure 5 est une vue en perspective, selon un autre angle, de l'unité d'équipement des figures 3 et 4.

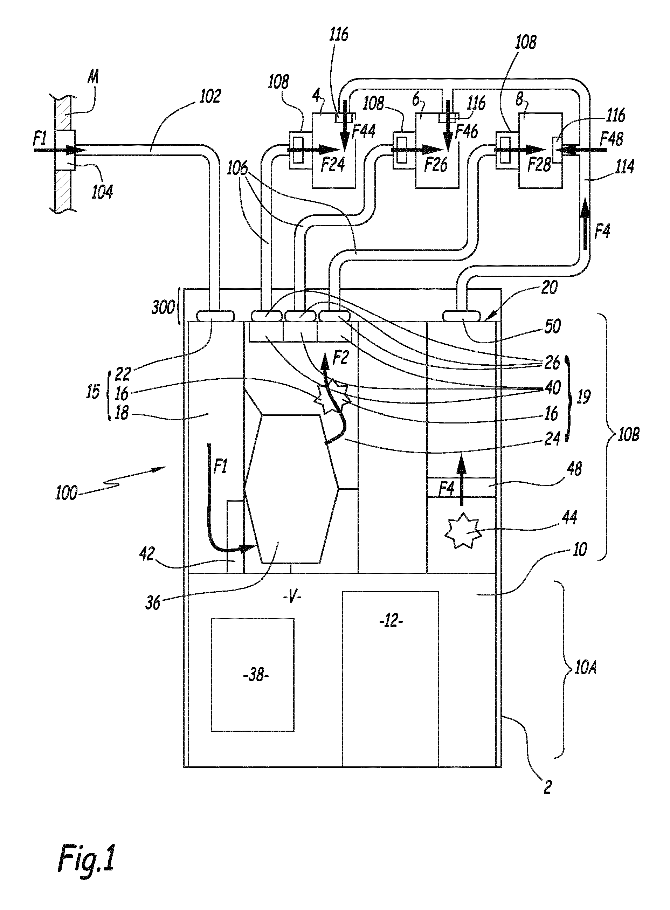

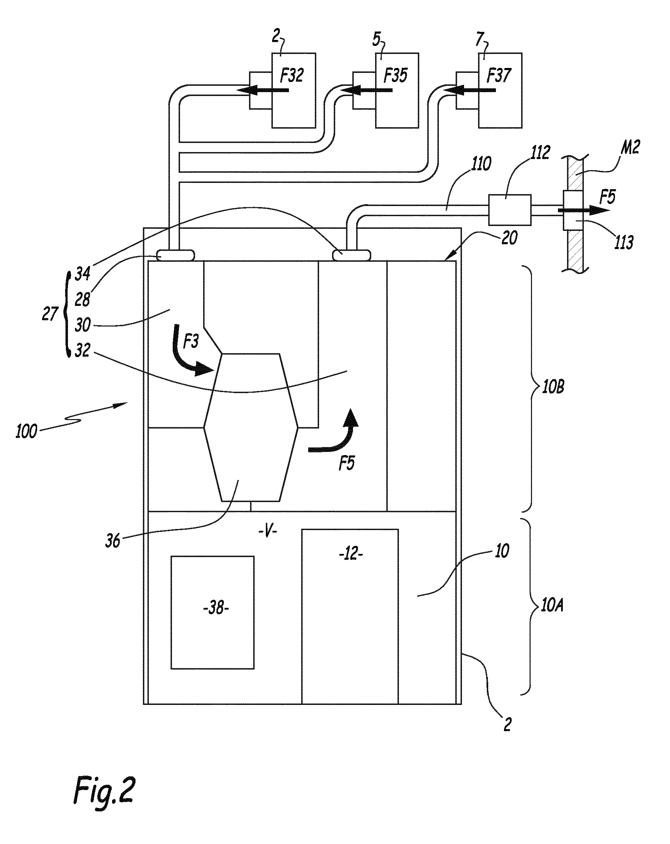

Une installation de ventilation et de traitement d'air 100 est représentée sur les figures 1 et 2. Cette installation est destinée à équiper un local, tel qu'un logement d'habitation, comprenant des toilettes 2, constituant une pièce technique, et une ou plusieurs pièces de vie. Dans l'exemple, le logement comprend une salle de séjour 4 et deux chambres 6 et 8. De façon optionnelle, le logement comprend également deux autres pièces techniques, une salle de bains 5 et une cuisine 7. L'installation 100 comprend une unité d'équipement 10, installée dans les toilettes 2. L'unité d'équipements 10 est mise en place dans les toilettes 2 et forme un meuble définissant un volume intérieur V de forme globalement parallélépipédique renfermant un support de WC 12. L'unité 10 comprend des habillages extérieurs décoratifs non représentés. L'unité d'équipement 10 comporte une partie inférieure 10A dans laquelle le support de WC 12 est monté, et qui renferme également un système de chasse d'eau 14.

Dans l'exemple, le support de WC 12 est placé dans une position centrale. En variante, non représentée, le support de WC 12 peut être décalé sur le côté gauche ou droit de l'unité 10, notamment pour l'adaptation aux personnes à mobilité réduite.

Le logement comprend un faux plafond 300 situé généralement dans un couloir du logement et qui dessert chacune des pièces 2, 4 et 8. Le faux plafond 300 constitue un unique volume étanche reliant toutes les pièces du logement. Une paroi supérieure 20 de l'unité 10 est montée dans une ouverture non représentée du faux plafond 300 dont la forme correspond à la forme de la paroi supérieure 20.

L'unité d'équipement 10 comprend une partie supérieure 10B qui renferme un système 15 d'aspiration d'un flux d'air neuf F1 provenant de l'extérieur du logement. Ce système comprend un ventilateur d'insufflation 16 et un compartiment d'aspiration 18. Un piquage de raccordement 22, qui appartient au système 15 et communique avec le compartiment d'aspiration 18, est monté dans la paroi supérieure 20. Le piquage 22 est destiné à être raccordé à une conduite d'aspiration 102 de l'installation 100, elle-même raccordée à une bouche d'aspiration extérieure 104 montée dans un mur M donnant vers l'extérieur du bâtiment dans lequel se trouve le logement, ou dans un plafond.

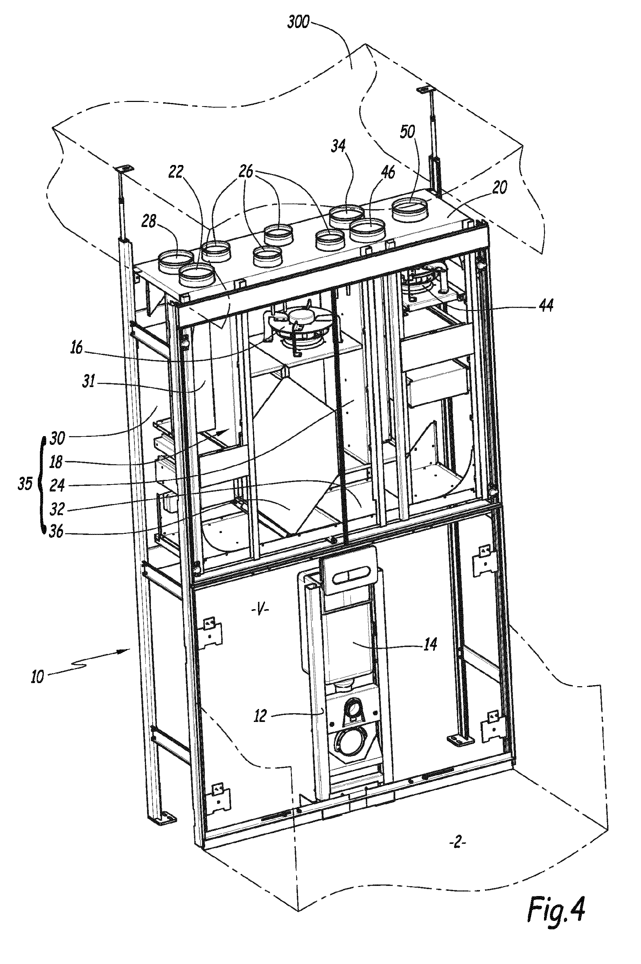

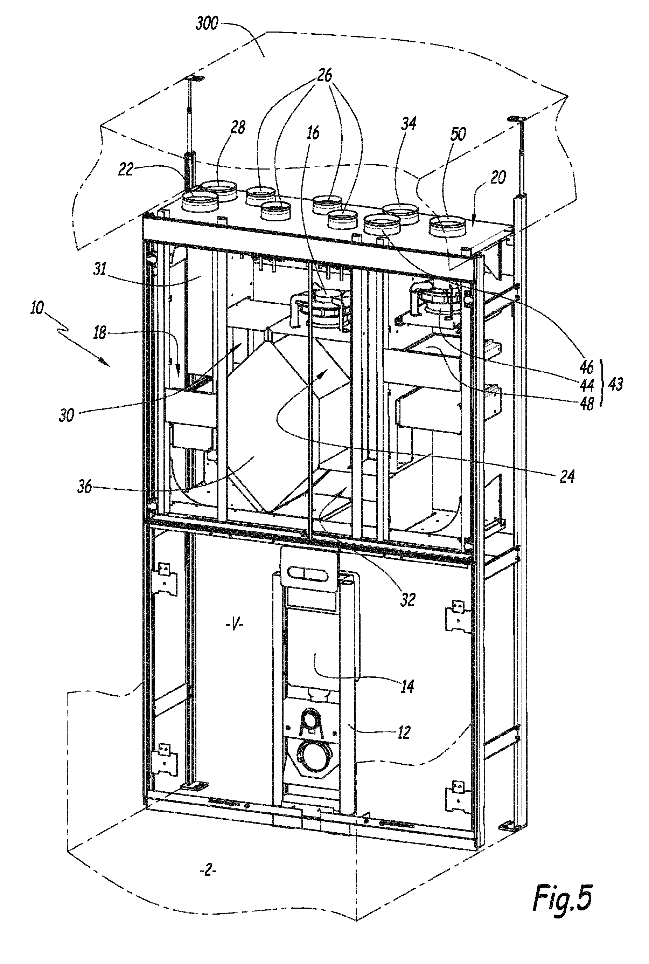

L'unité d'équipement 10 comprend également un système 19 de soufflage d'un flux d'air insufflé F2 dans les pièces de vie du logement, qui comprend le ventilateur d'insufflation 16, un compartiment de soufflage 24 et des piquages de raccordement de sortie 26 montés dans la paroi supérieure 20. Les piquages 26 sont connectés à des conduites d'air 106, installées dans le faux plafond 300, qui acheminent le flux d'air F2 vers les pièces de vie 4, 6 et 8, via des bouches de soufflage 108. Comme cela est représenté uniquement sur les figures 4 et 5, l'unité 10 peut comprendre une quatrième bouche de sortie 26 permettant la ventilation et le chauffage d'une quatrième pièce, ou d'une deuxième zone d'une des pièces 4, 6 et 8.

L'unité d'équipement 10 comprend également un système 27 d'extraction d'air des pièces techniques du logement. Ce système, visible à la figure 2, comprend un piquage de raccordement 28 ménagé dans la paroi supérieure 20, par laquelle des flux d'air F32, F35 et F37 sont respectivement extraits des toilettes 2, de la salle de bains 5 et de la cuisine 7, et qui communique avec un compartiment d'extraction 30 de l'unité d'équipement 10. La réunion des flux d'air F32, F35 et F37 forme un flux d'air extrait F3 qui entre dans l'unité d'équipement 10 par le compartiment 30. Les compartiments d'aspiration 18 et d'extraction 30 sont situés côte à côte dans l'unité d'équipement 10. Le compartiment d'extraction 30 est séparé du compartiment d'aspiration 18 par une paroi verticale 31 visible aux figures 4 et 5.

Par commodité, les toilettes 2 sont représentées sur la figure 2 par deux éléments distincts. En réalité, les toilettes 2 sont d'un seul tenant.

Le système d'extraction 27 comprend également un compartiment d'évacuation 32, raccordé à un piquage de raccordement 34 ménagé dans la paroi supérieure 20. Le piquage 34 est raccordé à une conduite d'évacuation 110 de l'installation 100. Un caisson d'extraction 112, comprenant un ventilateur d'extraction, non représenté, commun à plusieurs locaux ou la totalité des locaux est connecté à la conduite d'évacuation 110. D'autres conduits d'évacuation analogues à la conduite 110, provenant d'autres logements, peuvent être raccordés au caisson 112. La conduite d'évacuation 110 évacue l'air extrait à travers une bouche 113 montée par exemple dans un mur M2 du bâtiment, comme cela est représenté par la flèche F5. Selon une variante non représentée, le caisson d'extraction 112 peut être installé sur un toit du bâtiment, dans le cadre d'un système d'extraction centralisé pour tous les locaux du bâtiment. Selon une variante, non représentée, le ventilateur d'extraction peut être intégré dans l'unité d'équipement 10.

L'unité d'équipement 10 inclut également un système de récupération d'énergie 35, permettant d'utiliser l'énergie calorifique contenue dans le flux d'air extrait F3 pour réchauffer le flux d'air neuf F1. Le système de récupération d'énergie comprend un échangeur à double flux 36 dont les entrées sont respectivement raccordées au compartiment d'aspiration 18 et au compartiment d'extraction 30, et dont les sorties sont respectivement raccordées au compartiment de soufflage 24 et au compartiment d'évacuation 32. Dans l'échangeur 36, des échanges thermiques, par exemple, à contre-flux, ont lieu entre le flux d'air neuf F1 et le flux d'air extrait F3, par exemple au moyen de plaques, de micro canaux ou de tout autre technique adaptée.

Ainsi, lorsque le flux d'air neuf F1 passe dans l'échangeur 36, il récupère une certaine quantité d'énergie calorifique contenue dans le flux d'air extrait F3 et est ensuite soufflé dans les pièces 4, 6 et 8 sous la forme des flux d'air insufflés F24, F26 et F28.

De façon optionnelle, l'unité d'équipement 10 comprend un système de distribution 38 d'eau chaude, installé dans la partie inférieure 10A de l'unité d'équipement 10 et qui est alimenté en eau chaude par une conduite non représentée provenant d'un système de production centralisée d'eau chaude, également non représenté, du logement ou de l'ensemble des logements.

L'unité d'équipement 10 comprend des batteries de chauffage 40 qui appartiennent au système de soufflage 19, installées dans le compartiment de soufflage 24 en amont des bouches de sortie 26 et adaptées pour chauffer les flux d'air F24, F26 et F28 insufflés dans les pièces de vie du logement. Dans l'exemple, les batteries 40 sont des batteries à eau chaude. L'eau chaude est acheminée vers les batteries 40 par des canalisations non représentées, et le débit d'eau chaude dans les batteries 40 est réglé séparément pour chaque pièce 4, 6 ou 8 en fonction d'une consigne de température fixée dans les pièces 4, 6 ou 8 par un utilisateur ou un programme prédéfini.

Selon une variante de l'invention, les batteries 40 peuvent être des batteries de chauffage électrique, des batteries change-over, à détente directe, ou toute autre batterie permettant le transfert de calories.

Le système de distribution 38 est également adapté pour distribuer de l'eau chaude sanitaire à des équipements sanitaires non représentés du logement, tels qu'une douche, un évier, un lavabo, etc., qui peuvent être présents dans les pièces techniques 2, 5 et 7.

Selon un aspect optionnel de l'invention, l'unité d'équipement 10 peut comprendre une batterie de chauffage 42 par exemple à eau chaude située en amont de l'échangeur 36 dans le compartiment d'aspiration 18 et permettant de réaliser un préchauffage du flux d'air neuf F1 préalablement à son entrée dans l'échangeur 36. Le débit d'eau chaude dans la batterie 42 est également contrôlé à partir du système de régulation 38. En variante, la batterie 42 peut être une batterie de chauffage électrique, une batterie change-over, à détente directe ou toute autre batterie permettant le transfert de calories.

L'unité d'équipement 10 comprend également un système auxiliaire de chauffage 43, adapté pour insuffler un flux d'air d'appoint F4 dans les pièces 4, 6 et 8. Ce système comprend un ventilateur de recyclage 44 apte à aspirer une quantité d'air prédéterminée dans les pièces 4, 6 et 8. Des grilles non représentées ménagées dans le faux plafond 300 dans les pièces 4, 6 et 8 permettent d'aspirer l'air, qui circule de manière libre dans le faux plafond 300, jusqu'à l'unité d'équipement 10 dans laquelle l'air aspiré entre par un piquage 46 ménagé dans la paroi supérieure 20.

En variante non représentée, l'air recyclé peut être acheminé vers l'unité d'équipements 10 par des conduites d'air au lieu de circuler dans le faux plafond 300.

L'air aspiré est recyclé et réchauffé, au moyen d'une batterie 48 à eau chaude, et insufflé dans les pièces 4, 6 et 8 via un réseau de distribution auxiliaire appartenant à l'installation 100 et comprenant une conduite 114 installée dans le faux plafond 300, et raccordée à un piquage de raccordement 50 de l'unité 10, monté dans la paroi supérieure 20. Les pièces 4, 6 et 8 comprennent chacune une deuxième bouche 116 permettant la diffusion du flux d'air d'appoint F4 via des flux d'air respectifs F44, F46 et F48.

Ce système auxiliaire de chauffage 43, également appelé « boost », permet, sur une consigne d'un utilisateur, d'atteindre plus rapidement une valeur prédéterminée de température dans l'une des pièces 4, 6 et 8. La vitesse de rotation du ventilateur 44 et le débit d'eau chaude dans la batterie 48 peuvent être régulés de manière à atteindre en temps réduit une température prédéterminée. Le système auxiliaire de chauffage 43 permet également de réchauffer tout le logement rapidement après une période d'inoccupation.

En variante, la batterie 48 peut être une batterie de chauffage électrique ou tout autre type de batterie (détente directe, change-over, etc).

En variante, le système auxiliaire 43 de chauffage peut être utilisé pour chauffer la salle de bains 5, ou une autre pièce technique indépendante de type salle de bains.

Selon un mode de réalisation non représenté de l'invention, l'installation de ventilation et de traitement d'air 100 peut ne comprendre qu'une seule des bouches 108 et 116 dans les pièces 4, 6 et 8. Dans un tel cas, les bouches de diffusion d'air comprennent deux entrées différentes pour le flux d'air insufflé F2 et pour le flux d'air recyclé d'appoint F4.

Selon un mode de réalisation non représentée de l'invention, l'unité d'équipement 10 comprend une chaudière permettant de produire de l'eau chaude sanitaire, et/ou d'alimenter les batteries à eau chaude 40, 42 et 48.

Selon un mode de réalisation non représenté de l'invention, l'installation 100 et l'unité d'équipement 10 peuvent également être installés dans d'autres types de locaux, tels que des locaux tertiaires, sportifs, de divertissement, etc. qui comprennent également des pièces techniques telles que les toilettes 2 et dont les pièces de vie sont des bureaux, des salles de réunion, des salles de spectacle, des vestiaires, etc.

L'invention concerne également une installation de ventilation et de traitement d'air pour un bâtiment comprenant plusieurs locaux. Une telle installation comprend des moyens centralisés d'extraction d'air des locaux, formés par un ou plusieurs caissons d'extraction 112, et des moyens d'insufflation d'air neuf individualisés pour chaque local. Les moyens d'insufflation fonctionnent de manière individualisée pour chacun des locaux et comprennent, pour chaque local, une unité d'équipement 10 raccordée aux moyens centralisés d'extraction d'air.

Les caractéristiques des modes de réalisation et variantes décrits ci-dessus peuvent être combinées pour former de nouveaux modes de réalisation de l'invention.

## Revendications

1. Unité d'équipement (10) pour un local comprenant à la fois une ou plusieurs pièces techniques (2, 5, 7) incluant au moins des toilettes (2) et une ou plusieurs pièces de vie (4, 6, 8), cette unité étant destinée à être installée dans les toilettes (2), cette unité comprenant entre autres, dans un seul volume intérieur (V), un support de WC (12) et un système (19) de soufflage d'un flux d'air insufflé (F2) dans les pièces de vie (4, 6, 8) du local, le système de soufflage (19) comprenant un ventilateur d'insufflation (16) intégré à l'unité (10), **caractérisée en ce qu'**elle comprend en outre, dans le volume intérieur (V) :
- un système (15) d'aspiration d'un flux d'air neuf (F1) depuis l'extérieur d'un bâtiment dans lequel le local est situé,
- un système (27) d'extraction d'air (F3) de la ou des pièces techniques (2, 5, 7) du local,
- un système de récupération d'énergie (35), comprenant un échangeur (36) à double flux dont les entrées sont connectées au système d'aspiration d'air extérieur (15) et d'extraction (27), et dont une sortie est connectée au système de soufflage (19) de manière que le flux d'air (F1) aspiré à l'extérieur soit insufflé (F2) dans les pièces de vie (4, 6, 8) du local par le système de soufflage (19) après avoir subi un échange thermique avec le flux d'air extrait (F3) dans l'échangeur à double flux (36).

2. Unité d'équipement selon la revendication 1, **caractérisée en ce qu'**elle comprend un système auxiliaire (43) de chauffage adapté pour insuffler un flux d'air d'appoint (F4) dans les pièces de vie (4, 6, 8) du local.

3. Unité d'équipement selon la revendication 2, **caractérisée en ce que** le système auxiliaire (43) comprend une batterie (48) de chauffage adaptée pour chauffer le flux d'air d'appoint (F4).

4. Unité d'équipement selon l'une des revendications 2 et 3, **caractérisée en ce qu'**une paroi supérieure (20) de l'unité (10), destinée à être montée contre un faux plafond (300) du local dans laquelle le flux d'air d'appoint (F4) circule, comprend une ouverture (46) d'aspiration du flux d'air d'appoint (F4) dans l'unité (10).

5. Unité d'équipement selon l'une des revendications précédentes, **caractérisée en ce que** le système de soufflage (19) comprend des batteries (40) de chauffage pour chaque sortie d'air (26) vers l'une des pièces de vie (4, 6, 8) du local.

6. Unité d'équipement selon l'une des revendications précédentes, **caractérisé en ce qu'**elle comprend une batterie (42) de chauffage installée en amont de l'entrée du flux d'air neuf (F1) dans l'échangeur à double flux (36).

7. Unité d'équipement selon les revendications 3, 5 et 6, **caractérisée en ce qu'**elle comprend un système de distribution d'eau chaude (38) vers les batteries de chauffage (40, 42, 48) installées dans l'unité d'équipements (10) et adaptées pour chauffer les flux d'air (F2, F4) insufflés dans les pièces de vie (4, 6, 8) du local.

8. Unité d'équipement selon la revendication 7, **caractérisée en ce que** le système de distribution d'eau chaude (38) est également adapté pour distribuer de l'eau chaude sanitaire à des équipements sanitaires du local.

9. Unité d'équipement selon l'une des revendications précédentes, **caractérisée en ce qu'**elle comprend une chaudière apte à produire de l'eau chaude sanitaire ou alimenter des batteries à eau chaude (40, 42, 48) destinées à chauffer les flux d'air (F2, F4) insufflés dans les pièces de vie (4, 6, 8) du local.

10. Unité d'équipement selon l'une des revendications précédentes, **caractérisé en ce que** le système d'extraction (27) comprend un ventilateur d'extraction intégré à l'unité d'équipement (10).

11. Installation (100) de ventilation et de traitement d'air pour un local comprenant une unité d'équipement (10) selon l'une des revendications précédentes, **caractérisé en ce que** cette installation comprend en outre des conduites (106, 114) d'air installées dans un faux plafond (300) du local et des bouches (108, 116) de soufflage de flux d'air (F2, F4) provenant de l'unité d'équipement (10) raccordées aux conduites d'air.

12. Installation de ventilation et de traitement d'air pour un bâtiment comprenant plusieurs locaux, **caractérisée en ce qu'**elle comprend un ou des moyens centralisés d'extraction d'air des locaux et des moyens d'insufflation d'air individualisés pour chacun des locaux, comprenant, pour chaque local, une unité d'équipement (10) selon l'une des revendications 1 à 10 raccordée aux moyens centralisés d'extraction d'air.
